# EUROPEAN PATENT SPECIFICATION

(11) **EP 3 145 230 B1**
(45) Date of publication and mention of the grant of the patent: **29.05.2019**
(21) Application number: 14892151.3
(22) Date of filing: 23.09.2014
(51) Int. Cl.: H04W 8/18, H04W 64/00

(54) **METHOD AND DEVICE FOR CONTROLLING SUBSCRIBER IDENTITY MODULE CARD OF MOBILE TERMINAL**
VERFAHREN UND VORRICHTUNG ZUR KONTROLLE EINER TEILNEHMERIDENTITÄTSMODULKARTE EINES MOBILEN ENDGERÄTS
PROCÉDÉ ET DISPOSITIF POUR COMMANDER UNE CARTE DE MODULE D'IDENTITÉ D'ABONNÉ D'UN TERMINAL MOBILE

(30) Priority: 16.05.2014 CN 201410209773
(43) Date of publication of application: 22.03.2017
(73) Proprietor: ZTE Corporation, Shenzhen, Guangdong 518057 (CN)
(72) Inventor: MIAO, Haixiang, Shenzhen Guangdong 518057 (CN)
(74) Representative: Savi, Massimiliano
(86) International application number: PCT/CN2014/087153
(87) International publication number: WO 2015/172496

(56) References cited:
- EP-A1- 2 555 547
- EP-A1- 2 661 129
- EP-A1- 2 670 175
- EP-A2- 2 337 307
- CN-A- 102 300 193
- CN-A- 103 067 909
- CN-A- 103 379 560
- US-A1- 2002 154 632

## Description

### Technical Field

The present invention relates to the communication technology field, and in particular, to a method and apparatus for controlling a subscriber identity module card of a mobile terminal.

### Background of the Related Art

Expensive international roaming fees are often paid when a domestic subscriber identity module card (SIM card) is used in other countries. For the mobile terminal (such as a mobile phone) which can have multiple subscriber identity module cards at the same time, the user needs to manually select a subscriber identity module card to be used. When there are many subscriber identity module cards in the mobile terminal, it will bring much inconvenience to the user to manually select the subscriber identity module card.

The above content is only used for assistant understanding the technical scheme of the present invention, and does not mean admitting that the above content is the related art.

The document US 2002/154632 A1 discloses a method for switching between multiple SIM cards within a telephone. The method comprises the steps of storing a plurality of internal ID codes, each of which identifies a direct service provider of one of the SIM cards, receiving an ID code identifying one of the service providers, comparing the received ID code to each of the internal ID codes, and switching to one of the SIM cards when the service provider identified by the received ID code is recognized as the direct one of the SIM card switched to, identified by the corresponding internal ID code.

The document EP 2555547 A1 discloses a method for switching an international mobile subscriber identity, IMSI, comprising: acquiring public land mobile network, PLMN identification of a PLMN being currently visited by a user; judging whether an IMSI matching the PLMN identification exists in an IMSI list; and if yes, switching to the matching IMSI.

### Content of the Invention

In order to realize the above purpose, a method and an apparatus for controlling a subscriber identity module card of a mobile terminal according to independent claims are provided. Further improvements and embodiments are provided in the dependent claims.

### Brief Description of Drawings

FIG. 1 is a flow chart of a method for controlling a subscriber identity module card of a mobile terminal in the first embodiment of the present invention;
FIG. 2 is a flow chart of a method for controlling a subscriber identity module card of a mobile terminal in the second embodiment of the present invention;
FIG. 3 is a diagram of functional modules of an apparatus for controlling a subscriber identity module card of a mobile terminal in the first embodiment of the present invention;
FIG. 4 is a diagram of functional modules of an apparatus for controlling a subscriber identity module card of a mobile terminal of FIG. 3 in a preferred embodiment of the present invention;
FIG. 5 is a diagram of functional modules of an apparatus for controlling a subscriber identity module card of a mobile terminal in the second embodiment of the present invention;
FIG. 6 is a diagram of functional units of a judgment module in the apparatus for controlling the subscriber identity module card of the mobile terminal of FIG. 5.

The achievement of the objective, the function characteristics and advantages of the present invention will be illustrated by combining with the embodiments and with reference to the accompanying drawings.

### Preferred Embodiments of the Present Invention

It should be understood that the specific embodiments described herein are only used for interpreting the present invention and are not intended to limit the present invention.

Those skilled in the art can understand that, the mobile terminal proposed in the following embodiments of the method and apparatus for controlling the subscriber identity module card of the mobile terminal in the present invention include but not limited to the mobile terminals such as a mobile phone, a game machine, a computer, a tablet computer, a card reader of a subscriber identity module card, etc., and the present embodiment does not limit the specific type of the mobile terminal. In addition, at least two or more than two subscriber identity cards (SIM card) can be inserted into the mobile terminal mentioned in the embodiment of the invention, or the mobile terminal is connected with an external card inserting apparatus for inserting multiple subscriber identity module cards. And before the implementation of the following embodiments, the user already inserts all of its subscriber identity module cards into the mobile terminal or already inserts into the external card inserting apparatus.

In addition, the implementation subject of the method for controlling the subscriber identity card of the mobile terminal can be a mobile terminal, can be an internal apparatus which can realize the method inside the mobile terminal, and can also be an external apparatus which can realize the method communicated and connected with the mobile terminal, etc. In the following embodiments, the implementation subject of the embodiment of the present invention is preferred as a mobile terminal.

The present invention provides a method for controlling a subscriber identity module card of a mobile terminal.

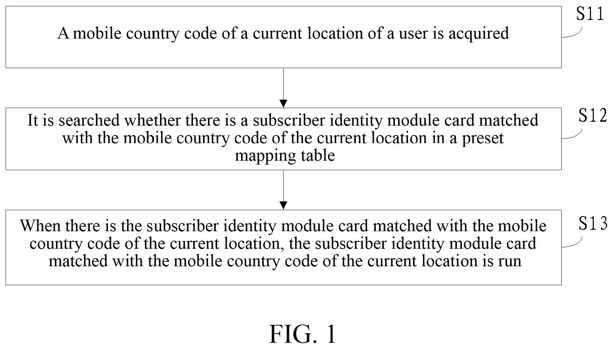

Referring to FIG. 1, FIG. 1 is a flow chart of a method for controlling a subscriber identity module card of a mobile terminal in the first embodiment of the present invention.

In the first embodiment, the method includes the following steps.

In step S11: a mobile country code of a current location of a user is acquired.

The mobile terminal acquires a mobile country code (MCC) of the current location of the user from a server (such as, an SIM card information maintenance server). In some cases, the mobile terminal can also acquire the international mobile subscriber identity code (IMSI) from the server, and extracts the mobile country code by the acquired international mobile subscriber identity code. The mobile terminal can trigger executing the step of acquiring the mobile country code of the current location of the user according to a certain trigger condition. For example, the mobile terminal is triggered to acquire the mobile country code of the current location of the user at every starting up of the mobile terminal. The mobile terminal may also execute the step of acquiring the mobile country code of the current location of the user every preset time period.

In step S12, it is searched whether there is a subscriber identity module card matched with the mobile country code of the current location in a preset mapping table.

The preset mapping table includes a mapping relationship between a mobile country code and a subscriber identity module card, and the preset mapping table is stored in the mobile terminal. The subscriber identity module card information in the preset mapping table is the subscriber identity module card which can be used by the user currently. If the subscriber identity module card information in the preset mapping table does not match the information of the subscriber identity module card which can be used currently, then it is likely that the preset mapping table is not updated timely, and its version is not the latest version and needs firstly to be updated for continuous use.

After the mobile terminal acquires the mobile country code of the current location of the user, it is searched whether there is a subscriber identity module card matched with the mobile country code of the current location in a preset mapping table.

In step S13, when there is the subscriber identity module card matched with the mobile country code of the current location, the subscriber identity module card matched with the mobile country code of the current location is run.

When there is the subscriber identity module card matched with the mobile country code of the current location, the mobile terminal runs the subscriber identity module card matched with the mobile country code of the current location for communication. For example, the user has traveled to the United States from China, and the mobile terminal acquires a mobile country code of the current location of the user as "310", and searches, in the preset mapping table, that the subscriber identity module card matched with the mobile country code of the current location "310" is "No. 8 subscriber identity module card", and then the mobile terminal runs the "No. 8 subscriber identity card" for communication, without requiring the user to manually switch the subscriber identity module card, which avoids the waste of resources caused by the user forgetting to switch the subscriber identity module card.

If the mobile terminal cannot find the subscriber identity module card matched with the mobile country code of the current location, this case may be that there is no subscriber identity module card matched with the mobile country code of the current location in the mobile terminal, and may also be because the preset mapping table is not updated timely, which causes the matched subscriber identity module card is not in the preset mapping table. When the mobile terminal cannot find the subscriber identity module card matched with the mobile country code of the current location, the mobile terminal can provide a selection interface for the user to select a subscriber identity module card which is required to be used, and the mobile terminal can also run a default subscriber identity module card preset by the mobile terminal or the user.

The present embodiment acquires the mobile country code of the current location of the user, searches whether there is a subscriber identity module card matched with the mobile country code of the current location in a preset mapping table, and when there is the subscriber identity module card matched with the mobile country code of the current location, runs the subscriber identity module card matched with the mobile country code of the current location. By means of the present embodiment, when the user arrives at another area, a subscriber identity module card matched with the location can be automatically searched for to perform communication, and the user does not need to manually select the subscriber identity module card matched with the location, thereby facilitating use of the user.

Please referring again to FIG. 1, in a preferred embodiment of the present invention, the method further includes:
setting a subscriber identity module card as a master card which is a subscriber identity module card used as default, and configuring an access point parameter of the master card.

The mobile terminal presets a subscriber identity module card as a master card, and the master card is a subscriber identity module card which is used by default. The mobile terminal can set automatically a subscriber identity module card as the master card according to the historical data, and can also be based on a setting command triggered by the technical personnel at the user side, that is, the mobile terminal sets a subscriber identity module card as the master card according to the setting command.

After the mobile terminal sets the master card, it configures the Access Point Name (APN) parameters of the master card, and after the configuration of the APN parameters, the mobile terminal is able to surf the internet by using the master card.

The present embodiment sets a subscriber identity module card as a master card which is a subscriber identity module card used as default, which makes that the user can use the master card for communication without manually selection in some cases.

Please referring again to FIG. 1, in a preferred embodiment of the present invention, the method further includes:
when there is no subscriber identity module card matched with the mobile country code of the location, running a subscriber identity module card preset as a master card.

When the mobile terminal cannot find the subscriber identity module card matched with the mobile country code of the location, it uses the subscriber identity module card which is preset as the master card for the communication, that is, there is no matched smart card for the user to use in the location in all usable subscriber identity module cards, and the mobile terminal automatically uses the subscriber identity module card which is preset as the master card for the communication.

In some embodiments, when the mobile terminal cannot find the subscriber identity module card matched with the mobile country code of the location, the mobile terminal provides the selection interface for the user to select a subscriber identity module card for use.

In the present embodiment, when there is no subscriber identity module card matched with the mobile country code of the location, the user does not need to manually select and can use the master card for communication, which facilitates the use of the user.

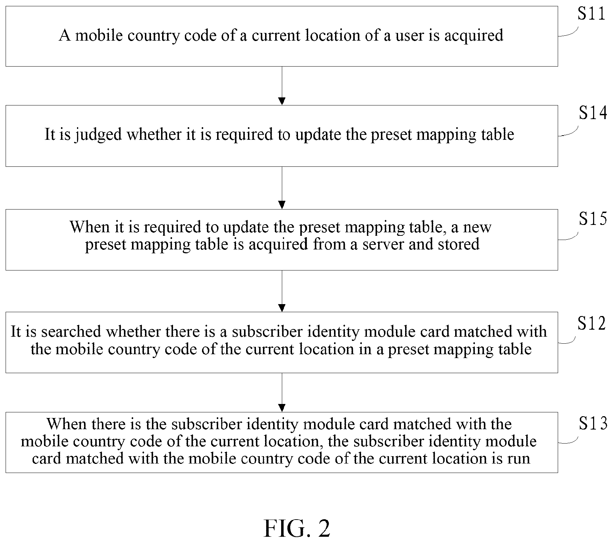

Referring to FIG. 2, FIG. 2 is a flow chart of a method for controlling a subscriber identity module card of a mobile terminal in the second embodiment of the present invention.

In the second embodiment of the method for controlling the subscriber identity module card of the mobile terminal of the present invention, the present embodiment is distinguished with the first embodiment, and on the basis of the first embodiment, before the step of searching whether there is a subscriber identity module card matched with the mobile country code of the current location in a preset mapping table, the method further includes:
in step S14, it is judged whether it is required to update the preset mapping table;
in step S15, when it is required to update the preset mapping table, a new preset mapping table is acquired from a server and stored.

The mobile terminal judges whether it is required to update the preset mapping table, and the mobile terminal may need to update the preset mapping table in the situations, such as first booting, restoring factory settings, inserting a new subscriber identity module card, removing an original subscriber identity module card, etc. The mobile terminal determines that it is required to update the preset mapping table when identifying the above status of requiring to update the preset mapping table. And it can also be that the above status of requiring to update the preset mapping table actively trigger the mobile terminal to update the preset mapping table. For example, it is automatically triggered to update the preset mapping table when the mobile terminal is booted for the first time or restores the factory settings, and also can be that it is automatically triggered to update the preset mapping table when the mobile terminal is booted every time.

When the mobile terminal determines that it is required to update the preset mapping table, then it acquires and stores an updated preset mapping table from a server. For example, the mobile terminal sends a request command to the server (such as the SIM card information maintenance server) when determining that it is required to update the preset mapping table, wherein, the request command includes the information of the subscriber identity module card in the mobile terminal. The server responds to the request command after receiving the request command sent by the mobile terminal, and sends the preset mapping table of the latest version to the mobile terminal. The mobile terminal stores the preset mapping table for later use after receiving the preset mapping table of the latest version.

It should be noted that there is a situation that mobile terminal is required to update the preset mapping table in preset conditions such as first booting, restoring the factory settings, every booting, etc.. If the preset mapping table has been the mapping table of the latest version when the above condition is triggered, then the server only randomly sends the version information of the preset mapping table to the mobile terminal when receiving the request command sent by the mobile terminal and identifying that the preset mapping table is the latest version, while without sending the preset mapping table to the mobile terminal.

The present embodiment judges whether it is required to update the preset mapping table before the step of searching whether there is a subscriber identity module card matched with the mobile country code of the current location in the preset mapping table. When it is required to update the preset mapping table, a new preset mapping table is acquired from the server and stored. The present embodiment performs an update detection to the preset mapping table before the step of searching whether there is the subscriber identity module card matched with the mobile country code of the current location in the preset mapping table, avoids the mobile terminal to search the subscriber identity module card matched with the mobile county code of the location in a preset mapping table of an old version, and thus resulting in a fault searching result.

Please referring again to FIG. 2, in a preferred embodiment of the present invention, the step of judging whether it is required to update the preset mapping table includes:
reading integrated circuit card identification codes of all subscriber identity module cards; and
identifying whether the read integrated circuit card identification codes of all subscriber identity module cards are the same with integrated circuit card identification codes of all subscriber identity module cards which were read last time; and if not, determining that it is required to update the preset mapping table.

The mobile terminal reads integrate circuit card identity (ICCID) codes of all usable subscriber identity module cards. The ICCID is the only identification number of the subscriber identity module card, so the mobile terminal can judge whether the number of the subscriber identity module cards in the mobile terminal is increased or decreased according to the read ICCIDs of all usable subscriber identity module cards. For example, the mobile terminal compares the ICCIDs of all subscriber identity module cards which are read at this time with the ICCIDs of all subscriber identity module cards which were read last time, if the ICCIDs of all subscriber identity module cards which are read at this time and the ICCIDs of all subscriber identity module cards which were read last time are different, the mobile terminal identifies that the ICCIDs of the current subscriber identity module cards have an increment or decrement compared with those of the subscriber identity module cards which were read last time, it is required to update the preset mapping table to make the contents of the preset mapping table matched with the information of the current subscriber identity module cards, so it is determined to be required to update the present mapping table. If the ICCIDs of all subscriber identity module cards which are read at this time and the ICCIDs of all subscriber identity module cards which were read last time are exactly the same, the mobile terminal identifies that the ICCIDs of the current subscriber identity module cards are same compared with those of the subscriber identity module cards which were read last time, so it is determined not to be required to update the preset mapping table.

The present embodiment judges whether the current subscriber identity module cards are different from those read last time based on the integrated circuit identification codes of the subscriber identity module cards. When the ICCIDs of the current subscriber identity module cards are the same with those of the subscriber identity module cards read last time, then it is determined to be required to update the preset mapping table. The method of judging whether it is required to update the preset mapping table of the present embodiment can accurately judge whether the subscriber identity module cards of the mobile terminal have an increment / decrement and a change, and thus more accurately judges whether it is required to update the present mapping table, which is conducive to the accuracy of subsequently searching the matched subscriber identity module card.

The present invention further provides an apparatus for controlling a subscriber identity module card of a mobile terminal.

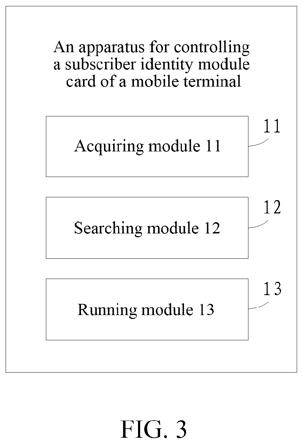

Referring to FIG. 3, FIG. 3 is a diagram of functional modules of an apparatus for controlling a subscriber identity module card of a mobile terminal in the first embodiment of the present invention.

In the first embodiment of the apparatus, the apparatus includes:
an acquiring module 11 is arranged to: acquire a mobile country code of a current location of a user;
the acquiring module 11 acquires a mobile country code (MCC) of the current location of the user from a server (such as, an SIM card information maintenance server). In some cases, the acquiring module 11 can also acquire the international mobile subscriber identity code (IMSI) from the server, and extracts the mobile country code by the acquired international mobile subscriber identity code. The acquiring module 11 can trigger executing the step of acquiring the mobile country code of the current location of the user according to a certain trigger conditions. For example, the acquiring module 11 is triggered to acquire the mobile country code of the current location of the user at every starting up of the mobile terminal. The acquiring module 11 may also be executing the step of acquiring the mobile country code of the current location of the user every preset time period.

A searching module 12 is arranged to: search whether there is a subscriber identity module card matched with the mobile country code of the current location in a preset mapping table.

The preset mapping table includes a mapping relationship between a mobile country code and a subscriber identity module card, and the preset mapping table is stored in the mobile terminal. The subscriber identity module card information in the preset mapping table is the subscriber identity module card which can be used by the user currently. If the subscriber identity module card information in the preset mapping table does not match the information of the subscriber identity module card which can be used currently, then it is likely that the preset mapping table is not updated timely, and its version is not the latest version and needs to be firstly updated for continuous use.

After the acquiring module 11 acquires the mobile country code of the current location of the user, the searching module 12 searches whether there is a subscriber identity module card matched with the mobile country code of the current location in the preset mapping table.

A running module 13 is arranged to: when there is the subscriber identity module card matched with the mobile country code of the current location, run the subscriber identity module card matched with the mobile country code of the current location.

When the searching module 12 finds that there is the subscriber identity module card matched with the mobile country code of the current location, the running module 13 runs the subscriber identity module card matched with the mobile country code of the current location for communication. For example, the user has traveled to the United States from China, and the acquiring module 11 acquires a mobile country code of the current location of the user as "310", and the searching module 12 searches, in the preset mapping table, that the subscriber identity module card matched with the mobile country code of the current location "310" is "No. 8 subscriber identity module card", and then the running module 13 runs the "No. 8 subscriber identity card" for communication, without requiring the user to manually switch the subscriber identity module card, which avoids the waste of resources caused by the user forgetting to switch the subscriber identity module card.

If the searching module 12 cannot find the subscriber identity module card matched with the mobile country code of the current location, this case may be that there is no subscriber identity module card matched with the mobile country code of the current location in the mobile terminal, and may also be because the preset mapping table is not updated timely, which causes the matched subscriber identity module card is not in the preset mapping table. When the searching module 12 cannot find the subscriber identity module card matched with the mobile country code of the current location, the apparatus can provide the selection interface for the user to select the subscriber identity module card which is required to use, and the apparatus can also run a default subscriber identity module card which is preset by the apparatus or the user.

In the present embodiment, the acquiring module 11 acquires the mobile country code of the current location of the user; the searching module 12 searches whether there is a subscriber identity module card matched with the mobile country code of the current location in a preset mapping table; when there is the subscriber identity module card matched with the mobile country code of the current location, the running module 13 runs the subscriber identity module card matched with the mobile country code of the current location for communication. By means of the present embodiment, when the user arrives at another area, a subscriber identity module card matched with the location can be automatically searched for to perform communication, and the user does not need to manually select the subscriber identity module card matched with the location, thereby facilitating use of the user.

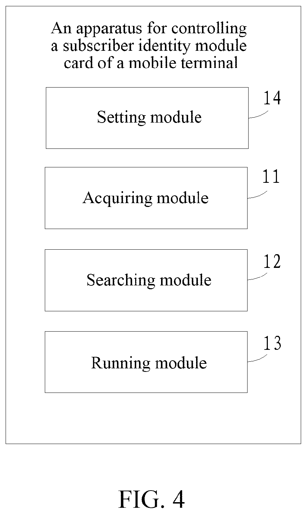

Referring to FIG. 4, FIG. 4 is a diagram of functional modules of an apparatus for controlling a subscriber identity module card of a mobile terminal of FIG. 3 in a preferred embodiment of the present invention.

In a preferred embodiment of the present invention, the apparatus includes:
a setting module 14 is arranged to: set a subscriber identity module card as a master card which is a subscriber identity module card used as default, and configure an access point parameter of the master card.

The setting module 14 presets a subscriber identity module card as a master card before the acquiring module 11 acquires the mobile county code of the location of the user, and the master card is a subscriber identity module card which is used by default. The setting module 14 can set automatically a subscriber identity module card as the master card according to the historical data, and can also be based on a setting command triggered by the technical personnel at the user side, that is, the setting module 14 sets a subscriber identity module card as the master card according to the setting command.

After the master card is set, the setting module 14 configures the Access Point Name (APN) parameters of the master card; and after the configuration of the APN parameters, the mobile terminal is able to surf the internet by using the master card.

The present embodiment sets a subscriber identity module card as a master card which is a subscriber identity module card used as default, which makes that the user can use the master card for communication without manually selection in some cases.

Please referring again to FIG. 3, in a preferred embodiment of the present invention, the running module 13 is further arranged to: when there is no subscriber identity module card matched with the mobile country code of the location, run a subscriber identity module card preset as a master card.

When the searching module 12 cannot find the subscriber identity module card matched with the mobile country code of the location, the running module 13 runs the subscriber identity module card which is preset as the master card, that is, there is no matched smart card for the user to use in the location in all usable subscriber identity module cards, and the running module 13 automatically runs the subscriber identity module card which is preset as the master card.

In some embodiments, when the searching module 12 cannot find the subscriber identity module card matched with the mobile country code of the location, the apparatus provides the selection interface for the user to select a subscriber identity module card for use.

In the present embodiment, when there is no subscriber identity module card matched with the mobile country code of the location, the user does not need to manually select and can use the subscriber identity module card which is preset as the master card for communication, which facilitates the use of the user.

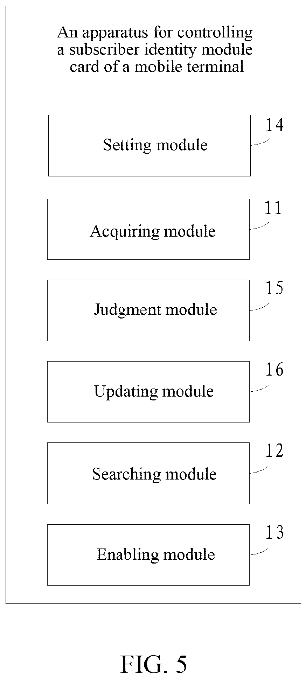

Referring to FIG. 5, FIG. 5 is a diagram of functional modules of an apparatus for controlling a subscriber identity module card of a mobile terminal in the second embodiment of the present invention.

In the second embodiment of the apparatus for controlling the subscriber identity module card of the mobile terminal of the present invention, the present embodiment is distinguished with the first embodiment, and on the basis of the first embodiment, the apparatus includes:
a judgment module 15 is arranged to: judge whether it is required to update the preset mapping table; and
an updating module 16 is arranged to: when it is required to update the preset mapping table, acquire and store a new preset mapping table from a server.

The judgment module 15 judges whether it is required to update the preset mapping table, and the updating module 16 may need to update the preset mapping table in the situations, such as, first booting, restoring factory settings, inserting a new subscriber identity module card, removing an original subscriber identity module card, etc. The judgment module 15 determines that it is required to update the preset mapping table when identifying the above status of requiring to update the preset mapping table. And it can also be that the above status of requiring to update the preset mapping table actively trigger the updating module 16 to update the preset mapping table. For example, the updating module 16 is automatically triggered to update the preset mapping table when the mobile terminal is booted for the first time or restores the factory settings, and also can be that the updating module 16 is automatically triggered to update the preset mapping table when the mobile terminal is booted every time.

When the judgment module 15 determines that it is required to update the preset mapping table, then it acquires and stores an updated preset mapping table from a server. For example, the updating module 16 sends a request command to the server (such as the SIM card information maintenance server) when the judgment module 15 determines that it is required to update the preset mapping table, wherein, the request command includes the information of the subscriber identity module card in the mobile terminal. The server responds to the request command after receiving the request command sent by the updating module 16, and sends the preset mapping table of the latest version to the updating module 16. The updating module 16 stores the preset mapping table for later use after receiving the preset mapping table of the latest version.

In the present embodiment, the judgment module 15 judges whether it is required to update the preset mapping table before the searching module 12 searches whether there is a subscriber identity module card matched with the mobile country code of the current location in the preset mapping table; The updating module 16 acquires from the server and stores the updated preset mapping table when requiring to update the preset mapping table. The present embodiment performs an update detection to the preset mapping table before the searching module 12 searches whether there is the subscriber identity module card matched with the mobile country code of the current location in the preset mapping table, avoids the searching module 12 to search the subscriber identity module card matched with the mobile county code of the location in a preset mapping table of an old version, and thus resulting in a fault searching result.

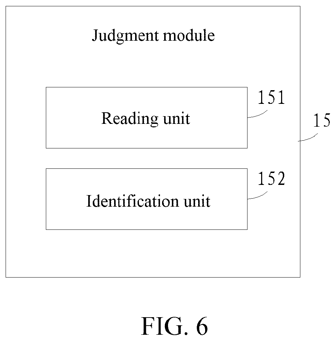

Referring to FIG. 6, FIG. 6 is a diagram of functional units of a judgment module in the apparatus for controlling the subscriber identity module card of the mobile terminal of FIG. 5.

In a preferred embodiment of the present invention, the judgment module 15 includes:
a reading unit 151 is arranged to: read integrated circuit card identification codes of all subscriber identity module cards; and
an identification unit is arranged to: identify whether the read integrated circuit card identification codes of all subscriber identity module cards are same with integrated circuit card identification codes of all subscriber identity module cards which were read last time; and if not, determine that it is required to update the preset mapping table.

The reading unit 151 reads integrate circuit card identity (ICCID) codes of all usable subscriber identity module cards. The ICCID is the only identification number of the subscriber identity module card, so the identification unit 152 can judge whether the number of the subscriber identity module cards in the mobile terminal is increased or decreased according to the read ICCIDs of all usable subscriber identity module cards. For example, the identification unit 152 compares the ICCIDs of all subscriber identity module cards which are read by the reading unit 151 at this time with the ICCIDs of all subscriber identity module cards which were read last time; if the ICCIDs of all subscriber identity module cards which are read at this time and the ICCIDs of all subscriber identity module cards which were read last time are different, the identification unit 152 identifies that the ICCID of the current subscriber identity module card has an increment or decrement compared with the one of the subscriber identity module cards which were read last time, and it is required to update the preset mapping table to make the contents of the preset mapping table are matched with the information of the current subscriber identity module card, therefore, the identification unit 152 determines that it is required to update the present mapping table; if the ICCIDs of all subscriber identity module cards which are read by the reading unit 151 at this time and the ICCIDs of all subscriber identity module cards which were read last time are exactly the same, the identification unit 152 determines that the ICCIDs of the current subscriber identity module cards are same compared with those of the subscriber identity module cards which were read last time, therefore, the identification unit determines that it is not required to update the preset mapping table.

The present embodiment judges whether the current subscriber identity module cards are different from those read last time based on the integrated circuit identification code of the subscriber identity module card. When the ICCIDs of the current subscriber identity module cards are the same with those of the subscriber identity module cards read last time, then it is determined to be required to update the preset mapping table. The method of judging whether it is required to update the preset mapping table of the present embodiment can accurately judge whether the subscriber identity module cards of the mobile terminal have an increment / decrement and a change, and thus more accurately judges whether it is required to update the present mapping table, which is conducive to the accuracy of subsequently searching the matched subscriber identity module card.

The above description is only the preferable embodiments of the present invention and is not intended to limit the patent scope of the present invention, which is set out in the appended claims.

### Industrial Applicability

By means of the embodiment of the present invention, when the user arrives at another area, a subscriber identity module card matched with the location can be automatically searched for to perform communication, and the user does not need to manually select the subscriber identity module card matched with the location, thereby facilitating usage of the user.

## Claims

1. A method for controlling a subscriber identity module card of a mobile terminal, comprising:
acquiring (S11) a mobile country code of a current location of a user;
searching (S12) whether there is a subscriber identity module card matched with the mobile country code of the current location in a preset mapping table; and
when there is the subscriber identity module card matched with the mobile country code of the current location, running (S13) the subscriber identity module card matched with the mobile country code of the current location,
wherein there are at least two subscriber identity module cards in the mobile terminal,
before the step of searching whether there is a subscriber identity module card matched with the mobile country code of the current location in a preset mapping table, further comprising:
judging (S14) whether the preset mapping table needs to be updated; and
when the preset mapping table needs to be updated, acquiring (S15) and storing (S15) a new preset mapping table from a server,
**characterized in that** the step of judging whether the preset mapping table needs to be updated comprises:
reading integrated circuit card identification codes of all subscriber identity module cards; and
when identifying that the read integrated circuit card identification codes of all subscriber identity module cards are different from integrated circuit card identification codes of all subscriber identity module cards which were read last time, determining that the preset mapping table needs to be updated,
wherein the integrated circuit card identification code is the only identification number of the subscriber identity module card.

2. The method according to claim 1, further comprising: when there is no subscriber identity module card matched with the mobile country code of the location, running a subscriber identity module card preset as a master card.

3. The method according to claim 2, further comprising:
setting a subscriber identity module card as the master card which is a subscriber identity module card used as default, and configuring an access point parameter of the master card.

4. An apparatus for controlling a subscriber identity module card of a mobile terminal, comprising:
an acquiring module (11), arranged to: acquire a mobile country code of a current location of a user;
a searching module (12), arranged to: search whether there is a subscriber identity module card matched with the mobile country code of the current location in a preset mapping table; and
an running module (13), arranged to: when there is the subscriber identity module card matched with the mobile country code of the current location, run the subscriber identity module card matched with the mobile country code of the current location,
a judgment module (15), arranged to: judge whether the preset mapping table needs to be updated; and
an updating module (16), arranged to: when the preset mapping table needs to be updated, acquire and store a new preset mapping table from a server,
wherein there are at least two subscriber identity module cards in the mobile terminal,
**characterized in that**, the judgment module comprises:
a reading unit, arranged to: read integrated circuit card identification codes of all subscriber identity module cards; and
an identification unit, arranged to: when identifying that the read integrated circuit card identification codes of all subscriber identity module cards are different from integrated circuit card identification codes of all subscriber identity module cards which were read last time, determine that the preset mapping table needs to be updated,
wherein the integrated circuit card identification code is the only identification number of the subscriber identity module card.

5. The apparatus according to claim 4, wherein, the running module is further arranged to:
when there is no subscriber identity module card matched with the mobile country code of the location, run a subscriber identity module card preset as a master card.

6. The apparatus according to claim 5, further comprising:
a setting module (14), arranged to: set a subscriber identity module card as the master card which is a subscriber identity module card used as default, and configure an access point parameter of the master card.

## Patentansprüche

1. Verfahren zur Steuerung einer Teilnehmeridentitätsmodulkarte eines mobilen Endgeräts, umfassend:
Erfassen (S11) eines mobilen Ländercodes einer aktuellen Position eines Benutzers,
Suchen (S12), ob es eine Teilnehmeridentitätsmodulkarte gibt, die mit dem mobilen Ländercode der aktuellen Position in einer voreingestellten Zuordnungstabelle übereinstimmt; und
wenn es Teilnehmeridentitätsmodulkarte gibt, die mit dem mobilen Ländercode der aktuellen Position übereinstimmt, Betreiben (S13) der Teilnehmeridentitätsmodulkarte, die mit dem mobilen Ländercode der aktuellen Position übereinstimmt,
wobei es wenigstens zwei Teilnehmeridentitätsmodulkarten in dem mobilen Endgerät gibt,
ferner umfassend, vor dem Schritt des Suchens, ob es eine Teilnehmeridentitätsmodulkarte gibt, die mit dem mobilen Ländercode der aktuellen Position in einer voreingestellten Zuordnungstabelle übereinstimmt:
Beurteilen (S14), ob die voreingestellte Zuordnungstabelle aktualisiert werden muss; und
wenn die voreingestellte Zuordnungstabelle aktualisiert werden muss, Erfassen (S15) und Speichern (S15) einer neuen voreingestellten Zuordnungstabelle von einem Server,
**dadurch gekennzeichnet, dass** der Schritt des Beurteilens, ob die voreingestellte Zuordnungstabelle aktualisiert werden muss, umfasst:
Lesen der Chipkarten-Identifikationscodes aller Teilnehmeridentitätsmodulkarten; und
wenn festgestellt wird, dass die gelesenen Chipkarten-Identifikationscodes aller Teilnehmeridentitätsmodulkarten sich von den zuletzt gelesenen Chipkarten-Identifikationscodes aller Teilnehmeridentitätsmodulkarten unterscheiden, Bestimmen, dass die voreingestellte Zuordnungstabelle aktualisiert werden muss,
wobei der Chipkarten-Identifikationscode die einzige Identifikationsnummer der Teilnehmeridentitätsmodulkarte ist.

2. Verfahren nach Anspruch 1, weiter umfassend: wenn es keine Teilnehmeridentitätsmodulkarte gibt, die mit dem mobilen Ländercode der Position übereinstimmt, Betreiben einer als Master-Card voreingestellten Teilnehmeridentitätsmodulkarte.

3. Verfahren nach Anspruch 2, weiter umfassend:
Einstellen einer Teilnehmeridentitätsmodulkarte als Master-Card, die eine als Standard verwendete Teilnehmeridentitätsmodulkarte ist, und Konfigurieren eines Zugangspunktparameters der Master-Card.

4. Vorrichtung zur Steuerung einer Teilnehmeridentitätsmodulkarte eines mobilen Endgeräts, umfassend:
ein Erfassungsmodul (11), das dazu angeordnet ist: Erfassen eines mobilen Ländercodes einer aktuellen Position eines Benutzers;
ein Suchmodul (12), das dazu angeordnet ist: Suchen, ob es eine Teilnehmeridentitätsmodulkarte gibt, die mit dem mobilen Ländercode der aktuellen Position in einer voreingestellten Zuordnungstabelle übereinstimmt; und
ein Betriebsmodul (13), das dazu angeordnet ist: wenn es eine Teilnehmeridentitätsmodulkarte gibt, die mit dem mobilen Ländercode der aktuellen Position übereinstimmt, Betreiben der Teilnehmeridentitätsmodulkarte, die mit dem mobilen Ländercode der aktuellen Position übereinstimmt,
ein Beurteilungsmodul (15), das dazu angeordnet ist: Beurteilen, ob die voreingestellte Zuordnungstabelle aktualisiert werden muss; und
ein Aktualisierungsmodul (16), das dazu angeordnet ist: wenn die voreingestellte Zuordnungstabelle aktualisiert werden muss, Erfassen und Speichern einer neuen voreingestellten Zuordnungstabelle von einem Server,
wobei es wenigstens zwei Teilnehmeridentitätsmodulkarten in dem mobilen Endgerät gibt,
**dadurch gekennzeichnet, dass** das Beurteilungsmodul umfasst:
eine Leseeinheit, die dazu angeordnet ist: Lesen der Chipkarten-Identifikationscodes aller Teilnehmeridentitätsmodulkarten; und
eine Identifikationseinheit, die dazu angeordnet ist: wenn festgestellt wird, dass die gelesenen Chipkarten-Identifikationscodes aller Teilnehmeridentitätsmodulkarten sich von den zuletzt gelesenen Chipkarten-Identifikationscodes aller Teilnehmeridentitätsmodulkarten unterscheiden, Bestimmen, dass die voreingestellte Zuordnungstabelle aktualisiert werden muss,
wobei der Chipkarten-Identifikationscode die einzige Identifikationsnummer der Teilnehmeridentitätsmodulkarte ist.

5. Vorrichtung nach Anspruch 4, wobei das Betriebsmodul ferner dazu angeordnet ist: wenn es keine Teilnehmeridentitätsmodulkarte gibt, die mit dem mobilen Ländercode der Position übereinstimmt, Betreiben einer als Master-Card voreingestellten Teilnehmeridentitätsmodulkarte.

6. Vorrichtung nach Anspruch 5, weiter umfassend:
ein Einstellmodul (14), das dazu angeordnet ist: Einstellen einer Teilnehmeridentitätsmodulkarte als Master-Card, die eine als Standard verwendete Teilnehmeridentitätsmodulkarte ist, und Konfigurieren eines Zugangspunktparameters der Master-Card.

## Revendications

1. Procédé pour commander une carte de module d'identité d'abonné d'un terminal mobile, comprenant :
l'acquisition (S11) d'un code de pays mobile d'un emplacement actuel d'un utilisateur ;
le fait de rechercher (S12) s'il existe une carte de module d'identité d'abonné appariée au code de pays mobile de l'emplacement actuel dans une table de correspondance prédéfinie ; et
quand il existe la carte de module d'identité d'abonné appariée au code de pays mobile de l'emplacement actuel, le fonctionnement (S13) de la carte de module d'identité d'abonné appariée au code de pays mobile de l'emplacement actuel,
dans lequel il existe au moins deux cartes de module d'identité d'abonné dans le terminal mobile, avant l'étape consistant à rechercher s'il existe une carte de module d'identité d'abonné appariée au code de pays mobile de l'emplacement actuel dans une table de correspondance prédéfinie, comprenant en outre :
le fait de juger (S14) si la table de correspondance prédéfinie doit être mise à jour ; et
quand la table de correspondance prédéfinie doit être mise à jour, l'acquisition (S15) et le stockage (S15) d'une nouvelle table de correspondance prédéfinie à partir d'un serveur,
**caractérisé en ce que** l'étape consistant à juger si la table de correspondance prédéfinie doit être mise à jour comprend :
la lecture des codes d'identification de cartes de circuit intégré de toutes les cartes de module d'identité d'abonné ; et
quand il est identifié que les codes d'identification de cartes de circuit intégré lus de toutes les cartes de module d'identité d'abonné sont différents des codes d'identification de cartes de circuit intégré de toutes les cartes de module d'identité d'abonné qui ont été lus la dernière fois, la détermination que la table de correspondance prédéfinie doit être mise à jour,
dans lequel le code d'identification de cartes de circuit intégré est l'unique numéro d'identification de la carte de module d'identité d'abonné.

2. Procédé selon la revendication 1, comprenant en outre : quand il n'existe aucune carte de module d'identité d'abonné appariée au code de pays mobile de l'emplacement, le fonctionnement d'une carte de module d'identité d'abonné prédéfinie comme une carte principale.

3. Procédé selon la revendication 2, comprenant en outre :
l'établissement d'une carte de module d'identité d'abonné comme la carte principale qui est une carte de module d'identité d'abonné utilisée par défaut, et la configuration d'un paramètre de point d'accès de la carte principale.

4. Appareil pour commander une carte de module d'identité d'abonné d'un terminal mobile, comprenant :
un module d'acquisition (11), agencé pour : acquérir un code de pays mobile d'un emplacement actuel d'un utilisateur ;
un module de recherche (12), agencé pour : rechercher s'il existe une carte de module d'identité d'abonné appariée au code de pays mobile de l'emplacement actuel dans une table de correspondance prédéfinie ; et
un module de fonctionnement (13), agencé pour : quand il existe la carte de module d'identité d'abonné appariée au code de pays mobile de l'emplacement actuel, faire fonctionner la carte de module d'identité d'abonné appariée au code de pays mobile de l'emplacement actuel,
un module de jugement (15), agencé pour : juger si la table de correspondance prédéfinie doit être mise à jour ; et
un module de mise à jour (16), agencé pour : quand la table de correspondance prédéfinie doit être mise à jour, acquérir et stocker une nouvelle table de correspondance prédéfinie à partir d'un serveur,
dans lequel il existe deux cartes de module d'identité d'abonné dans le terminal mobile,
**caractérisé en ce que** le module de jugement comprend :
une unité de lecture agencée pour : lire des codes d'identification de cartes de circuit intégré de toutes les cartes de module d'identité d'abonné ; et
une unité d'identification agencée pour : quand il est identifié que les codes d'identification de cartes de circuit intégré lus de toutes les cartes de module d'identité d'abonné sont différents des codes d'identification de cartes de circuit intégré de toutes les cartes de module d'identité d'abonné qui ont été lus la dernière fois, déterminer que la table de correspondance prédéfinie doit être mise à jour,
dans lequel le code d'identification de cartes de circuit intégré est l'unique numéro d'identification de la carte de module d'identité d'abonné.

5. Appareil selon la revendication 4, dans lequel le module de fonctionnement est agencé en outre pour : quand il n'existe aucune carte de module d'identité d'abonné appariée au code de pays mobile de l'emplacement, faire fonctionner une carte de module d'identité d'abonné prédéfinie comme une carte principale.

6. Appareil selon la revendication 5, comprenant en outre :
un module d'établissement (14) agencé pour : établir une carte de module d'identité d'abonné comme la carte principale laquelle est une carte de module d'identité d'abonné utilisée par défaut, et configurer un paramètre de point d'accès de la carte principale.
